# EUROPÄISCHE PATENTANMELDUNG

(11) **EP 0 704 585 A1**
(43) Veröffentlichungstag der Anmeldung: **03.04.1996**
(21) Anmeldenummer: 95114931.9
(22) Anmeldetag: 22.09.1995
(51) Int. Cl.: E04H 6/08

(54) **Verwendung eines Parkhauses für ein Personen-Nahverkehrskonzept**

(30) Priorität: 28.09.1994 DE 4434615
(71) Anmelder: SIEMAG TRANSPLAN GMBH, D-57250 Netphen (DE)
(72) Erfinder: Kabelitz, Hans-Peter, Dr., D-51147 Köln (DE)
(74) Vertreter: Müller, Gerd

(57) **Zusammenfassung**

Der Personen-Nahverkehr wird durch Verwendung von Parkhäusern, insbesondere automatischen, ein Lagerverwaltungssystem aufweisenden Parkhäusern, zur neben der Annahme und Rückgabe von Personenkraftfahrzeugen gleichzeitigen Bereitstellung von raumsparenden, umweltschonenden Kleinmobilen, für die im Parkhaus zur Energieversorgung Regenerationseinrichtungen angeordnet sind, individueller gestaltet.

## Beschreibung

Die Erfindung betrifft die Verwendung von Parkhäusern, insbesondere automatischen, ein Lagerverwaltungssystem aufweisenden Parkhäusern, die vorzugsweise in Stadtrandgebieten oder zentralen Orten, z.B. in der Nähe von Bahnhöfen oder Endstationen öffentlicher Verkehrsmittel, gelegen sind.

Wie sich gezeigt hat, sind trotz erheblicher Anstrengungen - beispielsweise Park and Ride-Konzepte, kostengünstige, attraktive Netzkarten, in den Hauptverkehrszeiten dichte Taktfolge der eingesetzten Verkehrsmittel, etc. - der öffentlichen Verkehrs- bzw. Verbundunternehmen in den letzten Jahren nach wie vor die meisten Personen nicht bereit, die öffentlichen Verkehrs- bzw. Nahverkehrsmittel zu nutzen; die insbesondere zu den Hauptverkehrszeiten in allen größeren und kleineren Städten meist unvermeidlichen Staus werden als unabwendbares Übel hingenommen. Das Verharren am eigenen Fahrzeug trotz dieser Situation mag an den gestiegenen Ansprüchen der PKW-Benutzer liegen, da Bahnen und Busse - abgesehen von KomfortAspekten - dem berechtigten Wunsch nach individueller Gestaltung der Fahrtroute und Wahl der Fahrziele nicht entsprechen können. Wenn die vorhandenen öffentlichen Nahverkehrsmittel dennoch genutzt werden, so liegt das häufig auch an dem gestiegenen Umweltbewußtsein.

Der Erfindung liegt daher die Aufgabe zugrunde, unter Ausnutzung von in Stadtrandgebieten und/oder zentralen Orten, wie in der Nähe von Bahnhöfen, vorhandenen, insbesondere automatischen, mit einem Lagerverwaltungssystem ausgerüsteten Parkhäusern den Personen-Nahverkehr zu verbessern.

Diese Aufgabe wird erfindungsgemäß durch die Verwendung von Parkhäusern zur neben der Annahme und Rückgabe von Personenkraftfahrzeugen gleichzeitigen Bereitstellung von raumsparenden Kleinmobilen gelöst, für die im Parkhaus zur Energieversorgung Regenerationseinrichtungen angeordnet sind. Mit einem solchermaßen ausgerüsteten Parkhaus, das vorteilhaft Ladestationen für die Energiespeicher der Kleinmobile aufweist, läßt sich eine entscheidende Verbesserung erreichen, um anspruchsvollen Verkehrsteilnehmern den Verzicht auf ihr eigenes Fahrzeug und das Umsteigen auf umweltschonende, sowie flächensparende, zudem die gewünschte individuelle Beweglichkeit ermöglichenden Transportmittel zu erleichtern.

Das den Komfort, die Individuallität, etc. steigernde Glied stellen hierbei erfindungsgemäß die im Parkhaus zur Vermietung bereitstehenden, kleinen, sehr beweglichen und raumsparenden sowie dabei gleichzeitig umweltschonenden Kleinmobile dar, wie insbesondere Elektromobile oder mit einem mechanischen Energiespeicher, z.B. einem Kreiselsystem (Hybridfahrzeug) oder einem elektrochemischen Speicher, z.B. in Wasserstoff-Technologie, betriebene Kleinmobile. Derartige Kleinmobile, die seit langem bekannt sind und zwei bis vier Personen Platz bieten, benötigen nur ca. 30 bis 50% des Platzes eines normalen Personenkraftfahrzeuges. Die vorgenannten oder ähnlich geeignete Energiespeicher erlauben einen Aktionsradius von ca. 50 bis 100 km, was den Anforderungen für die individuelle Nutzung im Stadtbereich allemal erfüllt.

Das mit den erfindungsgemäßen Regenerationseinrichtungen ausgestattete Parkhaus erlaubt somit eine klare Trennung zwischen dem Innenstadt- und dem Außenstadtverkehr. Denn größere Entfernungen außerhalb der Stadt lassen sich mit Fernzügen oder dem eigenen Personenkraftfahrzeug zurücklegen. Die Personenkraftfahrzeuge können nach dem Erreichen der Stadtrandbezirke in den dortigen Parkhäusern bzw. -anlagen abgestellt werden. Zur Beweglichkeit in der Stadt bieten sich sowohl den Bahnreisenden als auch den Benutzern von Personenkraftfahrzeugen dann zwei Transportmittel zur Wahl an, nämlich entweder die herkömmlichen Verkehrsmittel wie Straßenbahnen und/oder Busse, oder die individuelle Fortbewegung mit einem der in den Parkhäusern bereitstehenden Kleinmobile.

Den mit Kraftfahrzeugen anreisenden Personen bietet das Parkhaus somit nicht nur eine sichere Unterbringung ihrer Fahrzeuge, sondern gleichzeitig das Angebot zur Übernahme eines zur individuellen weiteren Fortbewegung gewünschten Kleinmobils. Während der Stillstandzeiten im Parkhaus werden die Kleinmobile mit Hilfe der Regenerationseinrichtungen "aufgetankt", d.h. an eine dem jeweiligen Energiespeicher entsprechende Regenerationseinrichtung angeschlossen; es steht somit stets ein den maximalen Aktionsradius ermöglichendes Kleinmobil zur Verfügung. Somit läßt sich ein automatisiertes Parkkonzept verwirklichen, das neben dem Einparken der Personenkraftfahrzeuge auch die Ausgabe, Rücknahme und Regeneration der vermieteten Kleinmobile einschließt.

Nach einem bevorzugten Vorschlag der Erfindung lassen sich automatische, d.h. mit einem Lagerverwaltungssystem (Hardware, Software), das die Parkhausbelegung und nötige Daten, beispielsweise Zeiten, Fahrzeug-Nummern und -Größen, Betriebsdauer, Nachladedauer, etc., speichern und jedem einzelnen Fahrzeug zuordnen kann, ausgerüstete Parkhäuser datentechnisch miteinander verbinden. Damit lassen sich sämtliche Parkhäuser, z.B. einer bestimmten Region, in einem Verbund betreiben, so daß es möglich ist, ein Kleinmobil an einem der Parkhäuser abzuholen und an einem anderen abzugeben, was sich vor allem für nicht mit einem eigenen Kraftfahrzeug anreisende Personen anbietet. Weiterhin läßt sich ein solcher Verbund beispielsweise auch dahingehend nutzen, direkt eine Parkplatzreservierung vorzunehmen, und zwar einerseits für die Kleinmobile innerhalb ihres Aktionsbereichs sowie andererseits für die normalen Kraftfahrzeuge bereits vor dem Erreichen der Stadt, z.B. über Autotelefon oder an entsprechenden Parkleitsäulen im Außenstadtbereich. Im Grunde ist damit in einfacher Weise eine Parkplatzverwaltung einer ganzen Innenstadt und ebenso ein modernes, komfortables Parkplatz-Leit- und Reservierungssystem für den erfaßten Bereich zu verwirklichen.

Weitere Einzelheiten und Vorteile der Erfindung ergeben sich aus den Patentansprüchen und der nachfolgenden Beschreibung, in der ein Ausführungsbeispiel des Gegenstandes der Erfindung anhand eines Personen-Nahverkehrsschemas näher erläutert ist.

Dem gezeigten Verkehrsschema läßt sich eine klare Trennung zwischen dem Stadt- und dem Rand- bzw. Fernverkehr entnehmen. In unmittelbarer Nähe von zum Stadtrandgebiet führenden Zubringerstraßen 1, 2 bzw. dort endenden öffentlichen Verkehrsmitteln 3, wie Straßen-, S-Bahnen und Busse, bzw. von am Stadtrand - oder auch zentral - gelegenen Bahnhöfen 4 sind Parkhäuser 5 angeordnet, z.B. in Form von bekannten, automatisierten, ein maximales Ausschöpfen des Raumangebotes ermöglichenden Regalparksystemen. Die Parkhäuser 5 erfüllen einerseits ihren üblichen Zweck, d.h. sie dienen dem Einparken von Personenkraftfahrzeugen; gleichzeitig sind sie jedoch mit Regenerationseinrichtungen zur Energieversorgung von raumsparenden, mit umweltfreundlicher Energie betriebenen Kleinmobilen ausgerüstet.

In den Parkhäusern 5 stehen deshalb einsatzfähige Kleinmobile zur Verfügung, die es einem Benutzer ermöglichen, sich in der Innenstadt I individuell zu bewegen. Das gilt gleichermaßen für Personen, die nicht mit einem Personenkraftfahrzeug, sondern mit Bussen oder Bahnen anreisen, da diese Reisenden die betriebsbereiten Kleinmobile in den an den Endstationen bzw. Bahnhöfen angeordneten Parkhäusern 5 anmieten können. Selbstverständlich steht es jedem Reisenden frei, statt auf ein Kleinmobil umzusteigen, im Bereich der Innenstadt I die dort angebotenen üblichen öffentlichen Verkehrsmittel zu benutzen.

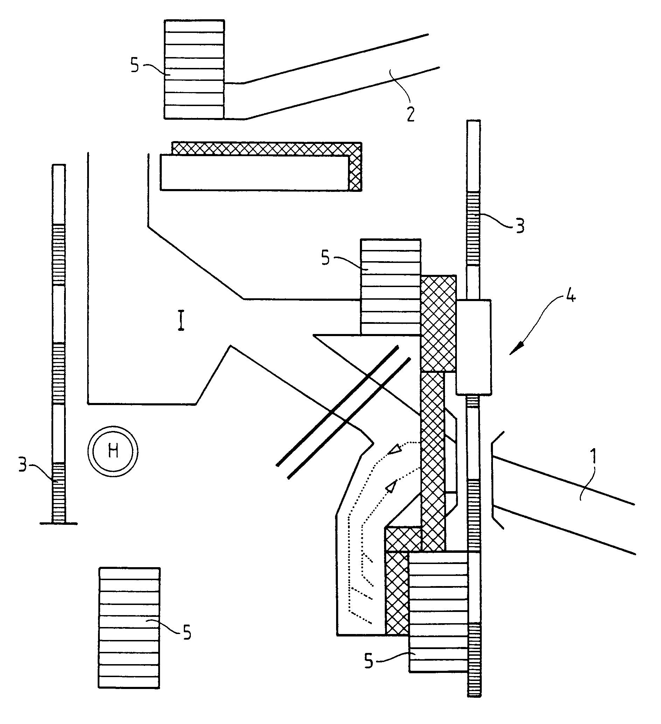

## Patentansprüche

1. Verwendung von Parkhäusern, insbesondere automatischen, ein Lagerverwaltungssystem aufweisenden Parkhäusern, zur neben der Annahme und Rückgabe von Personenkraftfahrzeugen gleichzeitigen Bereitstellung von raumsparenden, umweltschonenden Kleinmobilen, für die im Parkhaus (5) zur Energieversorgung Regenerationseinrichtungen angeordnet sind.

2. Parkhaus nach Anspruch 1,
**dadurch gekennzeichnet**,
daß es mit Batterie-Ladestationen ausgerüstet ist.

3. Parkhaus nach Anspruch 1 oder 2,
**dadurch gekennzeichnet**,
daß es Ladestationen für mit einem mechanischen Energiespeicher ausgerüstete Kleinmobile aufweist.

4. Parkhaus nach einem der Ansprüche 1 bis 3,
**dadurch gekennzeichnet**,
daß es Ladestationen für mit einem elektrochemischen Energiespeicher ausgerüstete Kleinmobile aufweist.

5. Parkhaus nach einem der Ansprüche 1 bis 4,
**gekennzeichnet durch**
einen datentechnischen Verbund der Lagerverwaltungssysteme mehrerer Parkhäuser.
